# EUROPEAN PATENT APPLICATION

(11) **EP 2 690 762 A1**
(43) Date of publication of application: **29.01.2014**
(21) Application number: 12178174.4
(22) Date of filing: 27.07.2012
(51) Int. Cl.: H02K 19/38

(54) **Conductive lead for a dynamo-electric machine and a dynamo-electric machine**

(71) Applicant: Siemens Aktiengesellschaft, 80333 München (DE)
(72) Inventor: Mehra, Jatin, 143001 Amritsar (IN)

(57) **Abstract**

A conductive lead (24) for a dynamo-electric machine (10) is presented comprising at least a portion of a conductive path for carrying an electrical current in the dynamo-electric machine (10), wherein the conductive lead (24) has at least one contacting member (22) adapted to provide an electrical connection between an exciter (12) and a rotor (16) of the dynamo-electric machine (10) characterized in that the contacting member (22) projects from an end (21) of the conductive lead (24).

## Description

The present invention relates to a dynamo-electric machine and more particularly to a conductive lead for a dynamo-electric machine, such as, but not limited to a generator.

Power generation plants produce electricity by converting energy (e.g. fossil fuel, nuclear fusion, hydraulic head and geothermal heat) into mechanical energy (e.g. rotation of a turbine shaft), and then converting the mechanical energy into electrical energy (e.g. by the principles of electromagnetic induction). Some of these power generation plants, such as a fossil fuel power generation plant, comprise a turbine, a generator and an exciter. The turbine, generator and exciter are typically coupled to each other in axial alignment, with the generator located between the turbine and the exciter.

The turbine converts fossil fuel energy into mechanical energy in the form of turbine shaft rotation through a steam or combustion cycle. The generator then converts the rotational energy into electrical energy. The generator includes an axially extending rotor journaled in an annular stator that surrounds and sleeves the rotor. The rotor has a shaft in which conductive coil windings are axially arranged. The stator has punchings that collectively from an annular core in which conductive coil windings are positioned parallel with respect to the axial rotor coils. As the turbine shaft rotates the generator rotor, the exciter provides an electrical current to the rotor coil windings. The rotating electrically charged rotor creates a magnetic flux that induces an electrical current in the stationary stator coil windings. This induced electrical current is then drawn from the stator and constitutes the electricity that the power generation plant provides to electricity consumers. One aspect of the above-described power generation scheme involves the electrical interconnection of the exciter and generator. An electrically conductive lead path is used to transport current in a closed loop configuration from the exciter, through the generator rotor coil windings, and then back to the exciter.

Currently, at the rotor exciter interface pins are used to connect the axial leads of the rotor and the exciter. These pins are used along with connection bands and with silver plating on inner surfaces of holes in the axial leads and/or the pins, which allows current transmission from the exciter axial leads to the rotor axial leads via the pins and connection bands. Use of separate pins makes the design of the electrical connection complex by introducing a lot of additional components which is time consuming during an assembly and disassembly. Furthermore, use of different components may also result in a risk of short circuiting.

It is therefore an object of the invention to design a conductive lead for electrical connection between the exciter and the rotor which involves fewer components and further provides an ease of assembly.

The object is achieved by providing a conductive lead for a dynamo-electric machine according to claim 1 and a dynamo-electric machine for power generation system according to claim 6.

According to the present invention, a conductive lead for a dynamo-electric machine is provided. The conductive lead comprises at least a portion of a conductive path for carrying an electrical current in the dynamo-electric machine, wherein the conductive lead has at least one contacting member adapted to provide an electrical connection between an exciter and a rotor of the dynamo-electric machine **characterized in that** the contacting member projects from an end of the conductive lead. By having the contacting member as an integral part of the conductive lead enables an ease of connection between the exciter and the rotor. Furthermore, use of additional components, such as connecting pins is obviated thereby making it cost effective.

In another aspect of the present invention, a dynamo-electric machine for a power generation system is presented. The dynamo-electric machine includes a rotor electrically coupled to the exciter through a conductive lead, wherein the conductive lead comprises at least one contacting member for providing an electrical connection between the rotor and the exciter **characterised in that** the contacting member projects from the conductive lead for providing an electrical connection between the exciter and the rotor.

In one embodiment, the conductive lead is a rotor conductive lead and/or an exciter conductive lead. Such an arrangement enables alternatively making the rotor conductive lead or the exciter conductive lead in accordance with aspects of the present technique enabling reduction of components either in the exciter or in the rotor.

In another embodiment, the rotor axial lead and/or the exciter axial lead. The rotor axial lead and the exciter axial lead enable electrical connection between the exciter and rotor in an axial direction.

In one embodiment, the conductive lead with the contacting member is formed by forging. Forging enables providing a desired shape, strength and toughness to the conductive lead with integrated contacting member.

In another embodiment, the contacting member is formed by machining the conductive lead. By machining a desired shape of the contacting member with desired dimensions is obtained.

In one embodiment, the conductive lead further comprises a radial lead and a contact strap for carrying an electrical current forming a conductive lead path.

In one embodiment, the contact strap is physically and electrically connected to a plurality of coil windings, providing the current to the coil windings to generate a magnetic flux in the generator.

The above-mentioned and other features of the invention will now be addressed with reference to the accompanying drawings of the present invention. The illustrated embodiments are intended to illustrate, but not limit the invention. The drawings contain the following figures, in which like numbers refer to like parts, throughout the description and drawings.
FIG. 1 is a cutaway side elevation view of a generator;
FIG. 2 is a schematic diagram depicting a connection between a rotor of the generator of FIG. 1 and an exciter, and
FIG. 3 is a schematic diagram depicting the conductive lead with contacting member, in accordance with aspects of the present technique.

Embodiments of the present invention generally relate to a conductive lead for a dynamo-electric machine, such as, but not limited to a generator. The generator is a turbogenerator which may be a hydrogen-cooled generator, water cooled generator and so forth.

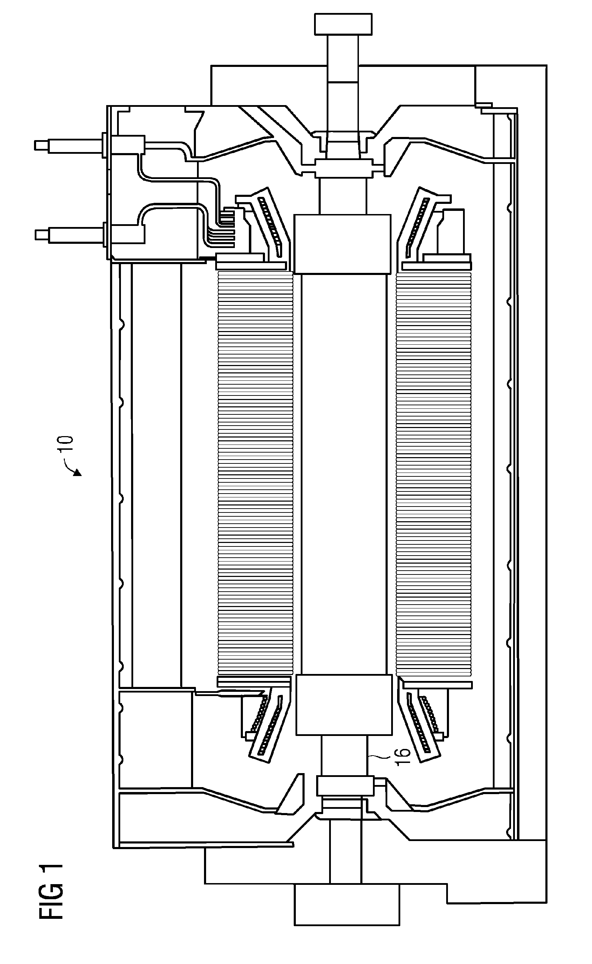

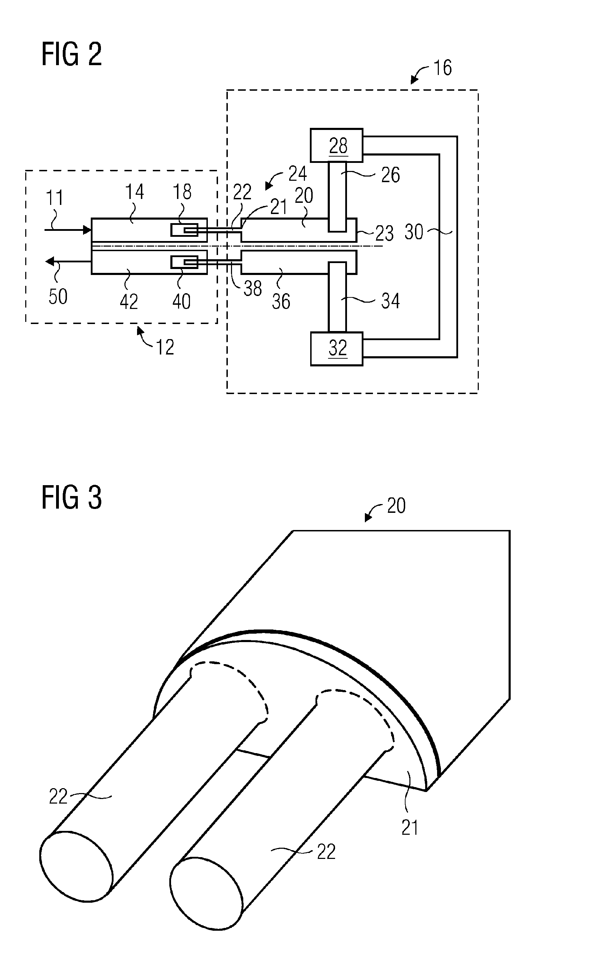

Referring now to FIG. 1 in combination with FIG. 2, a generator 10 is coupled in axial alignment between a turbine (not shown) and an exciter 12. The exciter 12 provides an electrical current to a generator rotor 16. The current typically is a direct current.

The current travels from the exciter 12 in a closed loop configuration along a conductive lead path, which travels through the generator rotor 16 to the rotor coil windings 30, and then back through another conductive lead path to the exciter 12.

The lead path commonly comprises a plurality of discrete interconnected conductive components, rather than a single unitary component. There are a variety of reasons why a plurality of components are advantageously used. For example, generator components near the lead path often cause a portion of the lead path to take on a particular size or shape. As another example, generator components near the lead path often cause the lead path to be attached to the generator in a particular manner. As yet another example, the lead path often experiences varying stress and load forces. As an additional example, generator fabrication and maintenance efforts can be hindered if the lead path comprises a single long unitary component.

As previously noted the conductive lead path includes conductive lead and other components for carrying electrical current. The conductive lead is an exciter conductive lead and a rotor conductive lead. For the purpose of the present invention the term "conductive lead" stands for both the exciter conductive lead and the rotor conductive lead, since the aspects of the present invention may be employed in both the rotor conductive lead and the exciter conductive lead.

With continuing reference to FIG. 2, the conductive lead path travels through the generator rotor 16, the conductive lead path includes a conductive lead 24, comprising a rotor axial lead 20 and a rotor radial lead 26. In the presently contemplated configuration the conductive lead 24 is the rotor conductive lead including the rotor axial lead 20 attached to the rotor radial lead 26. The rotor radial lead 26 is in turn attached to a contact strap 28, which is typically a J-strap. The conductive lead 24 physically and electrically connects with the exciter 12 and the contact strap 28 physically and electrically connects with the coil windings 30.

In the presently contemplated configuration the rotor axial lead 20 is connected with the exciter 12 thereby establishing electrical and physical connection.

More particularly, the rotor axial lead 20 is connected to the exciter axial lead 14 for establishing the electrical connection.

The rotor axial lead 20 includes at least one contacting member 22, which connects electrically and physically with the exciter 12. Particularly, the rotor axial lead 20 is connected to an exciter axial lead 14 through the contacting member 22.

In accordance with aspects of the present technique, the contacting member 22 is integral to the rotor axial lead 20. As used herein the term "integral" means "a part of" in accordance with the aspects of the present technique. The rotor axial lead 20 includes a first end 21 and a second end 23, wherein the first end 21 is proximal to the exciter 12.

In accordance with the aspects of the present technique, the contacting member 22 projects from the first end 21 of the rotor axial lead 20 and provides a connection between the exciter 12 and the rotor 16. The rotor radial lead 26 is connected to the rotor axial lead 20 at the second end 23.

It may be noted that the rotor axial lead 20 is made by forging to form the contacting member 22 thereon. Additionally, the contacting member 22 in the rotor axial lead 20 may be machined to obtain a desired shape. The contacting member may be designed in several shapes such as but not limited to a pin shape, a bolt shape and so forth. Although, in the illustrated FIG. 2, the rotor axial lead 20 comprises the contacting member 22, it may be noted that the contacting member 22 may also be formed in the exciter axial lead 14 or both the rotor axial lead 20 and the exciter axial lead 14. In other words, such a configuration is present in the conductive leads of the generator rotor 16 as well as the exciter 12.

As previously noted with reference to FIG. 2, the exciter 12 is connected to the generator rotor 16. The exciter 12 includes exciter axial lead 14 which is electrically and physically connected to the contacting member 22 of the rotor axial lead 20 through a connection band 18. A direct current 11 travels from the exciter 12 through the exciter axial lead 14 into the connection band 18 and thereafter to the contacting member 22 of the rotor axial lead 20. The current passes through the rotor radial lead 26 to the contact strap 28 into the rotor coil windings 30. The current travels back to the exciter 12 through a second conductive lead path comprising a second contact strap 32, a second rotor radial lead 34 and a second rotor axial lead 36 which includes contacting member 40 providing electrical and physical connection with a second exciter axial lead 42 via a second connection band 40 as an outlet current 50, thereby providing a closed loop configuration.

In accordance with aspects of the present technique, the conductive lead 24 is formed of a conductive material such as, but not limited to copper, aluminium, or any other conductive metal or alloy.

Referring now to FIG. 3, a portion of the conductive lead 24 (see FIG. 2) which is the rotor axial lead 20 and includes connecting member 22 projecting from the first end is depicted. As previously noted, the connecting member 22 may be formed in the rotor axial lead 20 by forging, as an example. The connecting member 22 may also be formed by machining the axial lead.

In accordance with the aspects of the present technique, the contacting member 22 are formed by forging of the conductive lead and thereafter machining to obtain a desired shape, which may be in the form of pins, bolts or combinations thereof.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A conductive lead (24) for a dynamo-electric machine (10) comprising at least a portion of a conductive path for carrying an electrical current in the dynamo-electric machine (10), wherein the conductive lead (24) has at least one contacting member (22) adapted to provide an electrical connection between an exciter (12) and a rotor (16) of the dynamo-electric machine (10)
**characterized in that** the contacting member (22) projects from an end (21) of the conductive lead (24).

2. The conductive lead (24) according to claim 1,
wherein the conductive lead is a rotor conductive lead and/or an exciter conductive lead.

3. The conductive lead (24) according to claims 1 and 2,
wherein the conductive lead is a rotor axial lead (20, 36) and/or an exciter axial lead (14, 42).

4. The conductive lead (24) according to any of the claims 1 to 3,
wherein the conductive lead with the contacting member (22) is formed by forging.

5. The conductive lead (24) according to claim 4,
wherein the contacting member (22) is formed by further machining the conductive lead (24).

6. A dynamo-electric machine (10) for a power generation system,
wherein the dynamo-electric machine (10) is operationally coupled between a turbine and an exciter (12), the dynamo-electric machine (10) comprising:
- a rotor (16) electrically coupled to the exciter (12) through a conductive lead (24), wherein the conductive lead (24) comprises at least one contacting member (22) for providing an electrical connection between the rotor (16) and the exciter (12)
**characterised in that** the contacting member (22) projects from an end (21) of the conductive lead (24) for providing an electrical connection between the exciter (12) and the rotor (16).

7. The dynamo-electric machine (10) according to claim 6,
wherein the conductive lead (24) is a rotor conductive lead.

8. The dynamo-electric machine (10) according to claim 7,
wherein the rotor conductive lead is a rotor axial lead (20, 36).

9. The dynamo-electric machine (10) according to claim 6,
wherein the conductive lead (24) is an exciter conductive lead.

10. The dynamo-electric machine (10) according to claim 9,
wherein the exciter conductive lead is an exciter axial lead (14, 42).

11. The dynamo-electric machine (10) according to any of the claims 6 to 10,
wherein the contacting member (22) has a pin shape, a bolt shape, or combinations thereof.

12. The dynamo-electric machine (10) according to any of the claims 6 to 11,
wherein the contacting member (22) of the conductive lead (24) is formed by forging.

13. The dynamo-electric machine (10) according to any of the claims 6 to 11,
wherein the contacting member (22) of the conductive lead (24) is formed by machining the conductive lead (24).

14. The dynamo-electric machine (10) according to any of the claims 6 to 13,
wherein the conductive lead (24) further comprises a radial lead (26, 34) and a contact strap (28, 32) for carrying an electrical current.

15. The dynamo-electric machine according to claim 14,
wherein the contact strap (28, 32) is a J-strap physically and electrically connected to a plurality of coil windings (30).
